# EUROPEAN PATENT APPLICATION

(11) **EP 4 717 998 A1**
(43) Date of publication of application: **01.04.2026**
(21) Application number: 25205335.0
(22) Date of filing: 29.09.2025
(51) Int. Cl.: F25B 45/00, B60H 1/00

(54) **SYSTEM AND METHOD FOR MANAGING AND TRACKING REFRIGERANT FLUID**

(30) Priority: 27.09.2024 US 202463700371 P
(71) Applicant: Vehicle Service Group, LLC, Madison, IN 47250 (US)
(72) Inventor: WENDLER, Ian, Madison, Indiana, 47250 (US); VAUGHAN, Tim, Madison, Indiana, 47250 (US); SPILLER, Douglas, M., Madison, Indiana, 47250 (US); PIKULA, Kyle, M., Madison, Indiana, 47250 (US); WEEKS, Mike, Madison, Indiana, 47250 (US)
(74) Representative: PGA S.p.A., Milano, Succursale di Lugano

(57) **Abstract**

Systems and methods for managing and tracking refrigerant fluid are disclosed. The systems and methods include the use of weight scales at storage areas for the refrigerant fluid containers and at refrigerant fluid recharge machines. A controller is configured to record the amounts of refrigerant fluid used. The controller can further manage use of the refrigerant fluid recharge machines, perform diagnostic functions including leak detection testing, and produce analytic reports on the use of the refrigerant fluid.

## Description

### CROSS-REFERENCE TO RELATED APPLICATIONS

The present application claims the priority benefit of U.S. Provisional Patent App. Serial No. 63/700,371, filed September 27, 2024, which is hereby incorporated by reference herein in its respective entirety.

### BACKGROUND

Air conditioners and heat pumps require refrigerant fluid to act as the working fluid of a vapor-compression cycle. Although refrigerant fluid is included as part of a generally closed-system, refrigerant fluid can require replacement if the refrigerant fluid is contaminated or can require replenishment due to leaks in the refrigerant system. Additionally, certain refrigerant systems can require replacement of the refrigerant fluid as part of a scheduled maintenance program. Such replacement or replenishment can present difficulties because refrigerant fluids are heavily regulated, require special handling, and are expensive making it essential that a robust management and monitoring programs are in place to manage, document, and track the refrigerant fluid. Additionally, multiple refrigerant fluids are commonly stored or used in the same service location. For example, R-12 (commonly known as "freon") and R-134a, are being phased out in favor of newer refrigerant fluids that have lower Ozone Depletion Potential and lower Global Warming Potential necessitating the need to control an inventory of multiple refrigerant fluids, machines, and procedures.

### SUMMARY

According to one embodiment, a system for tracking refrigerant fluid includes a controller and one or more refrigerant fluid recharge machines. Each of the one or more refrigerant fluid recharge machines includes a weight scale for measuring the weight of refrigerant fluid containers with the weight scale configured to transmit the measured weight to the controller. The controller enables operation of the one or more refrigerant fluid recharge machines after an authentication step. The controller is further configured to determine a change in the amount of refrigerant fluid in a refrigerant fluid container after an operation involving the refrigerant fluid container.

According to another embodiment, a diagnostic and troubleshooting system for an air-conditioning recharge machine includes a controller and a user interface connected to the controller. The controller includes a processor, memory, and hardware communication links to the air-conditioning recharge machine. The memory includes a database of diagnostic programs and troubleshooting programs. The user interface is connected to the controller and includes a screen for displaying information generated by the controller and for receiving user input. The controller is configured to run one or more of the diagnostic programs and troubleshooting programs. The diagnostic programs and troubleshooting programs are configured to run hardware on an air-conditioning recharge machine to verify operation of the air-conditioning recharge machine.

### BRIEF DESCRIPTION OF DRAWINGS

FIG. 1 depicts a schematic of a system for tracking refrigerant fluid including a controller, one or more refrigerant fluid storage locations, and one or more refrigerant fluid recharge machines.
FIG. 2 depicts a flow chart for the measurement of refrigerant fluid containers by a controller.
FIG. 3 depicts a schematic diagram of an exemplary controller.
FIGS. 4A to 4D depict illustrations of a user interface for a diagnostic test method.
FIG. 5 depicts a flow chart depicting the process to generate a report on the use of refrigerant recharge machines.
FIG. 6 depicts a schematic image of a controller running on a refrigerant recharge machine.
FIG. 7 depicts a schematic image of a remote controller wirelessly interfacing with a refrigerant recharge machine.
FIG. 8 depicts a flow chart for the dispensing of refrigerant fluid from a refrigerant fluid recharge machine including analytical reporting.
FIG. 9 depicts a sample loss report generated by a controller indicating the amount of unaccounted for refrigerant fluid.

### DETAILED DESCRIPTION

As will be described herein, systems and methods of managing and tracking refrigerant fluid are disclosed. The systems and methods include bulk tracking of refrigerant fluid at the inventory level, dispensation level, and disposal levels. Additionally, the systems and methods can include management systems for refrigerant fluid that can perform diagnostics, control dispensation and authorization of refrigerant fluid, and produce analytical reports.

As can be appreciated, refrigerant fluids differ from most other fluids that require inventory management and tracking. For example, although commonly referred to as a liquid, refrigerant fluid includes both a liquid and vapor component at standard temperatures and pressures. Such dual liquid and vapor components mean that most systems used to inventory liquids or gases are inadequate to accurately measure and track refrigerant fluid. In contrast to other known systems utilizing fluid flow or volume measurements, the systems and methods described herein can instead utilize weight to determine, and track, the amount of refrigerant fluid. Use of weight measurements, instead of volume measurements, ensures that refrigerant fluid is accurately tracked and free of errors caused by variations in temperature, fluid composition, refrigerant system pressure, ambient pressure, or other environmental factors.

Although existing liquid management systems are inadequate to accurately measure refrigerant fluid, tracking of refrigerant fluid is essential. Refrigerant fluids are expensive and heavily regulated for safety and environmental reasons. Refrigerant fluids, particularly older refrigerant fluids, can have high Ozone Depletion Potentials and Global Warming Potentials. As such, governmental agencies, such as the U.S. Environmental Protection Agency ("EPA"), regulate refrigerant fluids and can issue heavy fines for non-compliance. For automotives, the EPA requires certification under Sections 608 and 609 for technicians, refrigerant recovery and recycling equipment, leaks, authorized sales, disposal, reclamation, venting, and service practices. Such regulations further impose record keeping requirements including recordation of service dates, refrigerant fluid charge amounts, and related information for equipment servicing and disposal. Prior to the present application, existing refrigerant fluid inventory management solutions suffered from inaccuracy, cumbersome manual measurements, and often had unaccounted losses of refrigerant fluid including losses not known or appreciated by refrigerant fluid owners.

As can be further appreciated, accurately tracking refrigerant fluid is further complicated because errors in the tracking of refrigerant fluid can accumulate due to invisible or unknown sources of loss including leaks, trace amounts of refrigerant fluid left in hoses, boil off, and operator error. Additionally, tracking is made more difficult due to the difficulty in tracking contamination or counterfeit refrigerant fluids that can later be determined to be unusable. Refrigerant fluid can be easily damaged by improper storage temperatures or exposure to light. Counterfeit fluids may also include less effective stabilizers or even forego effective stabilizers.

Although the systems and methods described herein have been described for automotive air conditioning and heat pump systems, the systems and methods can further be applied to related fields including home and commercial Heating, Ventilation, and Air-Conditioning ("HVAC") systems, cryogenic systems, dehumidification systems, and manufacturers working with, or dispensing, other volatile chemicals. As can be appreciated, such related fields are regulated by, for example, the Clean Air Act as well as other law and regulations, that impose similar obligations and practices regarding the storage and dispensing of refrigerant fluids.

The systems and methods described herein can be used to track any refrigerant fluid. For example, the systems and methods can be used to track R-404A, R452A, R440A, R-744(CO2), R-290, R-513A as well as any other refrigerant fluid known or yet to be developed. In certain embodiments, the systems and methods can include an update process to add details about additional refrigerant fluids to the systems and methods described herein. Such details can include one or more of density, vapor pressure, and special handling procedures for the newly added refrigerant fluids.

Generally, the systems and methods described herein can include bulk inventory control processes, diagnostic methods, management processes, and analytical processes.

### Bulk Inventory Control

In certain embodiments, the systems and methods described herein can include automated recordation of refrigerant fluid at a bulk inventory level that records weight changes when refrigerant fluid is used or stored. For example, in certain embodiments, the bulk inventory control system can automatically determine and track the weight of a refrigerant fluid container when the container is stored, used, or disposed of (e.g., through sale to a third party, disposal due to contamination, etc.). As used herein, a refrigerant fluid container includes all containers that can contain or store refrigerant as understood by one of ordinary skill in the art including, without limitation, canisters, barrels, drums, tanks, vessels, bladders, membranes, cans, and capsules.

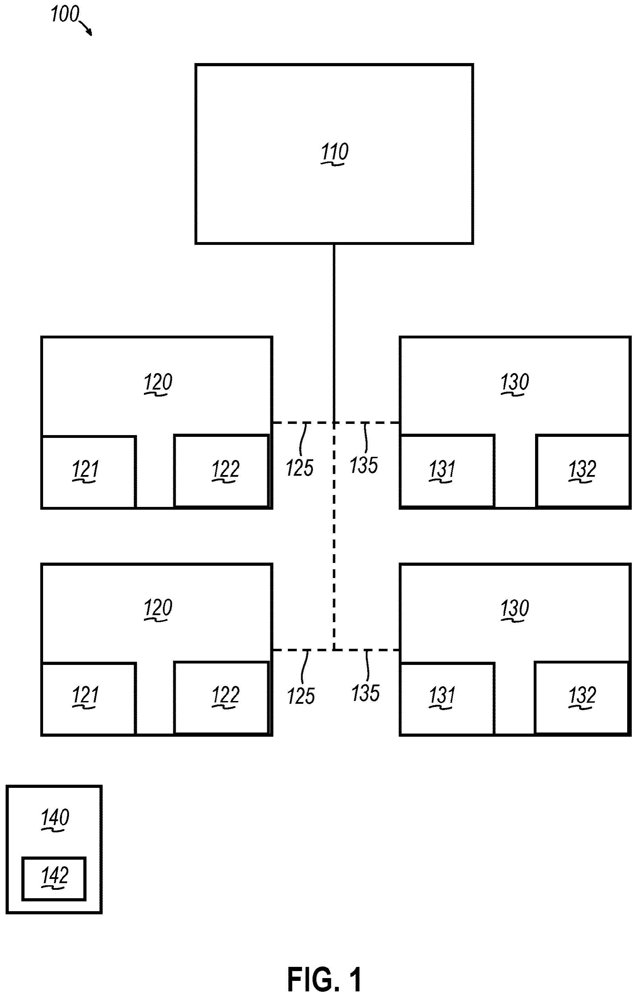

Generally, a bulk inventory control system can be operated in accordance with the bulk inventory control system 100 depicted in FIG. 1. As depicted, bulk inventory control system 100 can include an inventory management controller 110, one or more refrigerant fluid storage locations 120, one or more air-conditioning recharge machines 130, and one or more refrigerant fluid containers 140. The inventory management controller includes communication links 125 with the one or more refrigerant fluid storage locations 120 and communication links 135 with the one or more air-conditioning recharge machines 130.

The one or more refrigerant fluid storage locations 120 can generally be any location where a refrigerant fluid container 140 can be stored when not in active use. For example, refrigerant fluid storage locations can be a storage cabinet, storage shelf, open or closed rack, storage cart, etc. In certain embodiments, the storage location 120 can provide ideal conditions for the storage of refrigerant fluid that provides protection from physical damage or exposure to light or heat. In certain embodiments, the refrigerant fluid storage locations 120 can further include sensors that alert when the storage location exceeds safe storage conditions for a refrigerant fluid.

The one or more air-conditioning recharge machines 130 are machines used to recover, recycle, or recharge refrigerant fluid from an air conditioning system. For maintenance of an air conditioning system, the recharge machine can use a vacuum to remove existing air conditioning fluid from the air conditioning system to avoid cross contamination with any potentially contaminated air conditioning fluid and/or to ensure that the optimal amount of refrigerant fluid is filled into the air conditioning system. A refrigerant analyzer can be used to verify the type and quality of any refrigerant removed from an existing system. Removed refrigerant fluid of good quality can be reused while damaged or contaminated refrigerant fluid can be stored for proper disposal.

The recharge machine can further include a pump or pressure systems to dispense new refrigerant fluid into a refrigerant system from a refrigerant fluid container 140. The amount of refrigerant fluid dispensed by the recharge machine can be controlled by weight. Refrigerant machines can include additional features in various embodiments such as a user interface, drain lines, and waste containers. Additional details of suitable air-conditioning recharge machines are disclosed in U.S. Patent Nos. 8,616,011 B2; 11,565,570 B2; and 8,950,237, each of which is incorporated herein by reference in their respective entireties.

At least one of the refrigerant fluid storage locations 120 and at least one of the air-conditioning recharge machines 130 can include a weight scale (121, 131) to accurately measure the amount of refrigerant fluid contained within a refrigerant fluid container 140 or used by the air-conditioning recharge machine 130 and transmit the weight to the inventory management controller 110. In certain embodiments, each of the refrigerant fluid locations 120 and air-conditioning recharge machines 130 can include a weight scale.

In certain embodiments, weight scales 131 for the air-conditioning machine 130 can measure the weight of the entire air-conditioning recharge machine 131. Measuring the weight of the air-conditioning machine 130 can enable the system 100 to measure the weight of any refrigerant fluid contained within the air-conditioning recharge machine 130 outside of the container 140 (e.g., in pipes, valves, hoses, etc.) Additionally, or alternatively, such weight scales 131 can enable the system 100 to work with air-conditioning recharge machines 130 that do not incorporate a built-in scale. In certain such embodiments, the weight scale 131 can be a floor weight scale that the recharge machine 130 sits upon, a ceiling mounted weight scale that can lift the recharge machine, or weight sensors in the supports of the recharge machine 130 (e.g., attached to the legs, casters, etc.).

In various embodiments, the refrigerant fluid locations 120 and air-conditioning recharge machines 130 can include a tag reader (122, 132) to scan a tag 142 on the one or more refrigerant fluid containers 140. Tag 142 can be an optical tag, such as a 1-dimensional barcode or a 2-dimensional barcode (e.g., a QR code), or a radio-frequency tag, such as a Radio Frequency Identification ("RFID") tag or Near-Field Communication ("NFC") tag. The tag 142 can uniquely identify a refrigerant fluid container 140. Information from tag 142 can be read by the tag reader (122, 132) and can be transmitted to the controller 110 over communication links (125, 135) in conjunction with the measured weight of the refrigerant fluid container 140 and/or air-conditioning recharge machine 130.

In various embodiments, the tag 142 can store additional data in one or more data fields. In such embodiments, the data fields can include one or more of the tare weight of the container, the tare weight of the air-conditioning recharge machine, the manufacture date of the container, the manufacturer of the container, the manufacturer of the refrigerant fluid, and the type of refrigerant fluid included in the container. As can be appreciated, certain radio-frequency tags can include updatable non-volatile memory enabling recordation of additional values such as the shelf-life of the refrigerant fluid included in the container and the amount of refrigerant fluid contained with the container. Alternatively, the additional data can be associated with the unique tag identifier and instead stored on the inventory management controller 110. The tag can be applied by an end user of the bulk inventory system 100 described herein or can be applied by the manufacturer or supplier in other embodiments. In certain embodiments, the manufacturer or supplier can use the tag to attest to the quality and supply chain of the refrigerant fluid.

Generally, the inventory management system 100 can measure the weight of the refrigerant fluid each time a refrigerant fluid is moved or accessed. For example, placement of a refrigerant fluid 140 at a refrigerant fluid storage location 120 can trigger measurement of the weight of the refrigerant fluid container 140. In certain embodiments, the measurement can be fully automatic including scanning of the tag 142 on the refrigerant fluid container 140. In other embodiments, initiation of the scale can be manually triggered with identification of the refrigerant fluid container occurring either manually or automatically.

Similarly, installation of a refrigerant fluid container 140 on an air-conditioner recharge machine 130 can similarly trigger weighing of the refrigerant fluid container 140. Weighing of the refrigerant fluid container 140 or air-conditioning recharge machine 130 can additionally occur both before recharging of an air-conditioning unit and after recharging of an air-conditioning unit to verify the amount dispensed.

In certain embodiments, access to the refrigerant fluid storage locations 120 and/or air-conditioning recharge machines 130 can be tracked and/or restricted to authorized users. In such embodiments, a unique identifier must be utilized by the user accessing or moving fluid such as an employee ID, employee badge, phone identity provider application, biometric data, authentication code, or any other method of identifying a user or employee. This identifier, along with a timestamp, can be logged in the system to identify every individual who accessed or moved fluids as well as the amount of fluids used by that user, the machines and canisters used, the expected and actual amounts of fluids necessary for the particular job, and any other associated information such as a purchase order ("PO") number or work order number. In certain embodiments, the system can restrict access and can require one or more of valid identification, purchase order, or other authentication before allowing operations to proceed.

Additionally, or alternatively, the system can be configured to operate and dispense refrigerant fluid based on one or more of the purchase order, work order, and refrigerant system to be serviced. For example, the system can be configured to dispense only up to a pre-determined amount of refrigerant fluid based on a Vehicle Identification Number ("VIN") or vehicle make and model. The system can also log when there is a discrepancy between the expected amounts dispensed and the actual amounts dispensed. In certain embodiments, the system and machine can further display relevant information on servicing and other maintenance steps. Troubleshooting and service manuals can also be provided.

In certain embodiments, the inventory management system 100 can omit weight sensors at one or more of the storage locations 120 or air-conditioning recharge machines 130. In such embodiments, measurements can be performed each time a refrigerant fluid container is stored at a refrigerant fluid storage location 120 or at the start and stop of each refrigerant fluid recharge session. Although potentially less accountable than a system including weight sensors at both the refrigerant fluid storage locations 120 and recharge machines 130, such systems have the advantage of lower cost particularly since many recharge machines 130 already include weight scales negating the need to include further hardware into system 100.

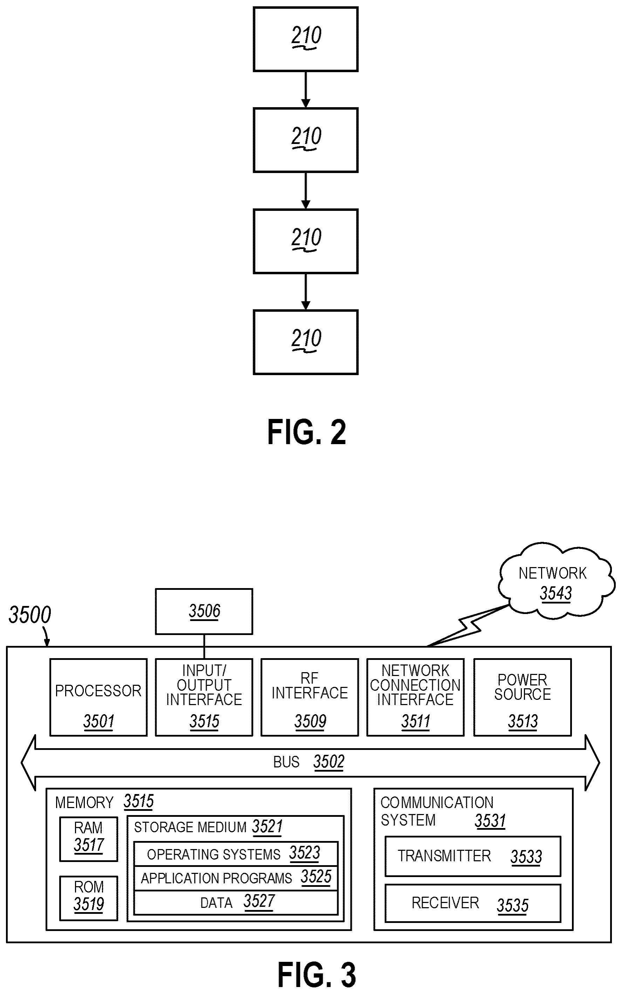

After a weight scale (121, 131) weighs a refrigerant fluid container 140, the weight can be transmitted over transmission links (125, 135) to the controller 110. A flow chart illustrating the process is depicted in FIG. 2 wherein the process starts at 210 with the installation or use of a refrigerant fluid container with the optional step of verifying a user or authorization. Following step 210, an identifying tag of the refrigerant fluid container is read at step 220. At step 230, the weight of the refrigerant fluid container and a value read from the identifying tag are sent to a controller. At step 240, the controller receives the weight of the refrigerant fluid container and the identifying tag and records the values to a database. In certain embodiments, the records can be stored to an external database, such as a cloud database.

In certain embodiments, additional steps can be included. For example, a refrigerant analyzer can be used to verify the type and quality of refrigerant fluid either in a canister or a refrigeration system to be serviced. Refrigerant fluid that is damaged, contaminated, or otherwise unusable can be tracked using the same inventory system previously described herein while refrigerant fluid of good quality can be tracked with the inventory of usable refrigerant fluids. For example, a waste container can be weighed and used to track the unusable refrigerant fluid prior to proper disposal.

FIG. 3 illustrates an embodiment of various computing devices which can function as controller 110, or components thereof. Controller 110 can comprise computers, tablets, servers, databases, mobile devices, or other computing or smart devices described herein. Figure 3 shows a schematic block diagram of a computing device 3500 (or components thereof) according to certain embodiments of the present disclosure.

Computing device 3500 includes processor 3501 that is operatively coupled via a bus 3502 to an input/output interface 3505, a power source 3513, a memory 3515, a RF interface 3509, network communication interface 3511, and/or any other component, or any combination thereof. The level of integration between the components may vary from one embodiment to another. Further, certain computing devices 3500 (or components thereof) may contain multiple instances of a component, such as multiple processors, memories, transceivers, transmitters, receivers, etc.

The processor 3501 is configured to process instructions and data and may be configured to implement any sequential state machine operative to execute instructions stored as machine-readable computer programs in memory 3515. Processor 3501 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processor 3501 may include multiple central processing units (CPUs).

In the example, input/output interface 3505 may be configured to provide an interface or interfaces to an input/output device(s) 3506, such as a screen, keyboard, indicator light, keypad, touchscreen, or other input or output device. Other examples of an output device include a speaker, a sound card, a video card, a display, a monitor, a printer, an actuator, an emitter, a smartcard, another output device, or any combination thereof. An input device may allow a user to capture information into system 3500. Other examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 3513 is structured as a battery or battery pack. Other types of power sources, such as an external power source (e.g., an electricity outlet), photovoltaic device, or power cell, may be used. The power source 3513 may further include power circuitry for delivering power from the power source 3513 itself, and/or an external power source, to the various parts of computing device 3500 via input circuitry or an interface such as an electrical power cable.

Memory 3515 may be configured to include memory such as random access memory (RAM) 3517, read-only memory (ROM) 3519, programmable read-only memory (PROM), erasable programmable read-only memory (EPROM), electrically erasable programmable read-only memory (EEPROM), magnetic disks, optical disks, hard disks, removable cartridges, flash drives, other storage medium 3521, and so forth. In one example, the memory 3515 includes one or more application programs 3525, an operating system 3523, web browser application, a widget, gadget engine, or other application, and corresponding data 3527. Memory 3515 may store, for use by the computing device 3500, any of a variety of various operating systems or combinations of operating systems. An article of manufacture, such as one including a simulation system or communication system may be tangibly embodied as or in memory 2515, which may be or comprise a device-readable storage medium.

Processor 3501 may be configured to communicate with an access network or other network using the RF interface 3509 or network connection interface 3511. The RF interface 3509 or network connection interface 3511 may comprise one or more communication subsystems and may include or be communicatively coupled to an antenna. In the illustrated embodiment, communication functions of the RF interface 3509 or network connection interface 3511 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof.

The controller 110 as described in Figure 1, can perform a variety of method embodiments under the present disclosure. Several example method embodiments are given below but these examples are non-limiting and are only meant to illustrate certain embodiments. For example, controller 110 can receive the weight measurement and refrigerant fluid container unique identifier, and then store the transmitted values. The controller 110 can adjust for the tare weight of the refrigerant fluid container. Weights can be compared to previously measured weights of the same refrigerant fluid container to automatically determine the change in the amount of the refrigerant fluid. The controller 110 can include a database tracking the change in refrigerant fluid weight over each use. A user report can be electronically transmitted to a user and/or be printed.

In certain embodiments, the controller 110 can be a part of a refrigerant fluid recharge machine.

### Diagnostic Methods

In certain embodiments, the systems and methods described herein can further perform diagnostic verification of a refrigerant fluid system. The diagnostic verification can, for example, verify that the recharge machines are working within designed parameters, identify any issues, and suggest fixes to any detected issues. The diagnostic verification can include multiple levels such as an expert diagnostic mode, a user diagnostic mode, and a remote technician mode whereby a user may communicate with an offsite repair expert through the machine interface. An expert diagnostic mode can provide trained engineers with detailed numbers (e.g., pressures) and tracking history. A remote technician mode can involve having the offsite repair expert guide the user through diagnostic or repair steps, and/or enable the remote technician to access control components for the machine to carry out diagnosis and repair.

Conversely, a user diagnostic mode can provide a simplified display that indicates when an error is detected and whether there are any suggested corrective actions that the user can attempt to fix the error. The user diagnostic mode can include instructions (written, pictorial, animated, and/or audio) instructing the user on how to run the diagnostic and, if necessary, any steps to take to correct the error. For example, to run a leak test, the user diagnostic mode can display a series of images or videos that may be accompanied by audio explaining how to run the diagnostic test by attaching certain hoses and if a leak is detected, by tightening various connections. The steps may include any number of verification safeguards that would be apparent to one having ordinary skill in the art including internal controller verification that each step has been properly completed, manual on-screen advancement by the user through diagnostic steps, and indication (visual such as light or on-screen confirmation, haptic, or auditory confirmation) that the steps have been properly completed. In certain embodiments, the diagnostic mode can automatically detect when certain steps have been completed.

The diagnostic modes can also include an interactive interface. The interactive interface can enable the systems and methods to accept user input and/or to provide multi-step instructions or processes. For example, a user diagnostic mode can conduct a multi-step diagnostic process that asks a user to confirm when a machine has been configured for a different test while providing visual representations of proper configuration. The machine may provide visual, haptic, or auditory feedback either on a machine display or mobile device that the machine has been properly configured for a particular diagnostic step. Additionally, or alternatively, if an error is detected, the user interface can ask if the user has tried one error correction and then provide an alternative error correction if the first correction was insufficient to fix the issue.

If the diagnostic mode detects an uncorrectable error, the diagnostic mode can automatically generate a report and/or transmit the diagnostic log to an appropriate party. For example, the report and/or diagnostic log can be configured to be automatically or manually transmitted to one or more of managers, shop owners, authorized installers, maintenance technicians, maintenance companies, or insurance companies depending upon the configuration of the diagnostic mode and the type of error. In certain embodiments, diagnostic logs, or anonymized and/or aggregated logs, can be forwarded to a central database to track common issues for identification and correction by the manufacturer.

In certain embodiments, the diagnostic modes described herein can include a leak test. The leak test can generally include the step of having a controller interface with an air-conditioning recharge machine to run a series of leak detection tests. The leak detection tests can include one or more of a vacuum test, a pressure test, and hose and coupler tests. The leak test may be directed by visual or auditory prompts such as step-by-step instructions provided on the machine's display.

The vacuum test can determine if there is a leak by closing all of the valves on a recharge machine, engaging the vacuum pump, and then waiting a pre-determined amount of time to verify if the pressure increases (indicating a leak). If the pressure remains within a predetermined threshold the vacuum test can be considered to be successful.

In the pressure test, the controller may command the recharge machine to open the tank valves which can allow the system to pressurize the system and manifold. The opening of these valves can also be done manually as indicated by directions provided on the machine interface. The pressure test can verify if there is a leak between the internal tanks and gas manifold. If no gas is vented (detected by a drop in pressure or noise emitted by leaking gas), the pressure test can be considered to be successful.

The leak test can further sequentially test ancillary equipment including hoses, couplers, and other attachments. Ancillary equipment is tested sequentially by attaching each piece and then repeating the vacuum and pressure tests. If a leak or pressure drop is detected, the controller can identify the ancillary equipment as being defective. Each piece of ancillary equipment is generally tested sequentially to enable the controller to determine if the last piece of equipment installed is faulty. The controller may provide repair steps for a piece of faulty piece of equipment, attempt to troubleshoot an improper test, or suggest purchasing options for replacement equipment.

In certain embodiments, the diagnostic modes can be fully automated requiring no user input. In other embodiments, the diagnostic mode can request assistance from a user to configure equipment such as hoses and valves in a particular configuration.

As can be appreciated, other diagnostic tests can be performed either independently or with the assistance of a user. For example, self-tests for the electronics and computer or calibration tests can be performed as known in the art.

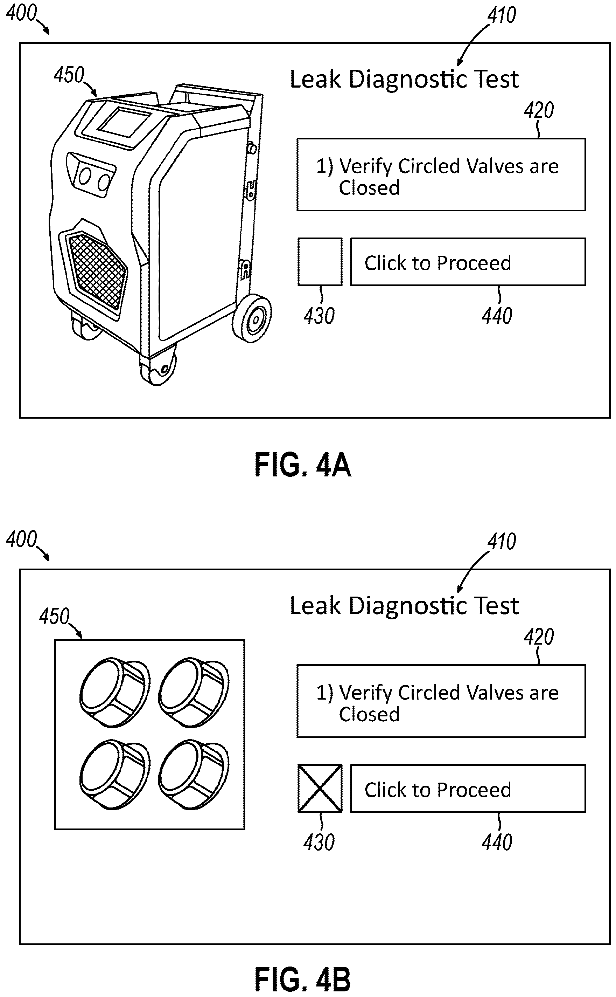

FIGS. 4A to 4D depict an example of user interface 400 for a diagnostic method. In the user interface 400, a screen displays a guided diagnostic test that includes the name of the test 410, instructions to the user 420, boxes for user input 430 (e.g., a checkbox), a button 440 to proceed to the next step, and an image 450 instructing the user on what steps they need to take. A speaker (not depicted) can further provide auditory feedback or audio instructions. A motor (not depicted) can also provide haptic feedback.

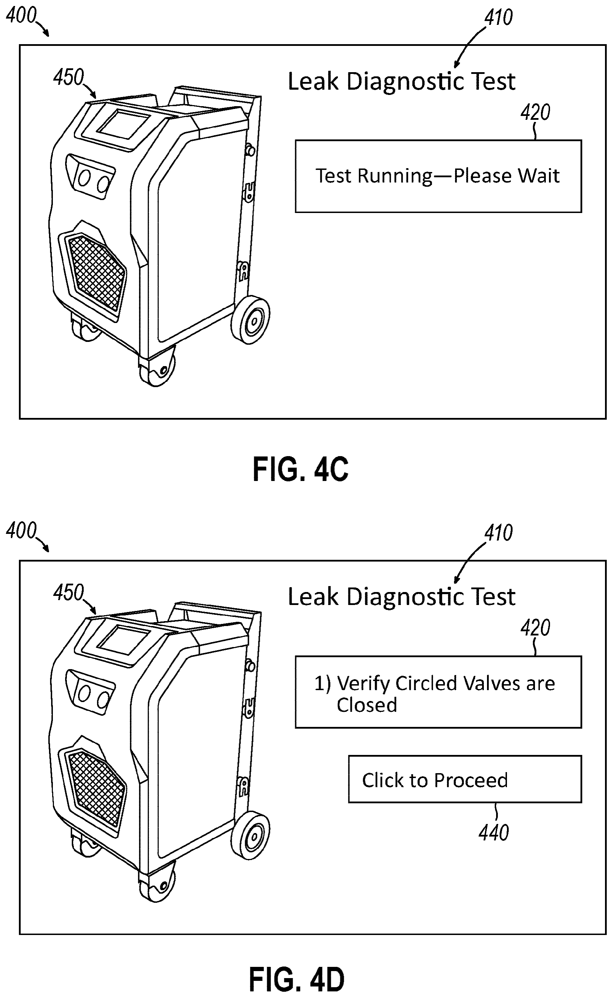

Image 450 can be interactive. For example, between FIGS. 4A and 4B, image 450 can zoom in or use color or other indicators to highlight components of interest to the repair procedure. For example a valve switch or hose connector may be highlighted for a user to easily recognize the correct action. In the particular diagnostic test depicted in FIG. 4, image 450 initially depicts the location of four valves on an air-conditioning recharge machine in FIG. 4A. In FIG. 4B, image 450 has zoomed in to show the detail of the four valves. An animation (not depicted) can also be played to a user to show how to close the indicated valves.

User input 430 can be a box to allow a user to confirm that the instructed steps have been performed. For the particular example depicted, a user can tap user input 430 to confirm that the valves have been closed. In certain other embodiments, more than one user input can be provided with each user input having its own checkbox. Multiple user inputs can be provided if multiple actions need to be taken by a user.

Once each of the user inputs 430 have been selected, button 440 becomes operable to move the diagnostic test to the next step. For example, once user input 430 has been selected in FIG. 4B, a user can tap button 440 to proceed to FIG. 4C.

In FIG. 4C, the diagnostic method can automatically run the diagnostic method as depicted in FIG. 4C. Once the test is complete, a results screen can be depicted as shown in FIG. 4D. If the test was completed successfully as depicted in FIG. 4D, box 440 can be pressed to proceed to the next step or to end the diagnostic method. Alternatively, the test can proceed to interactive troubleshooting if the diagnostic method was not completed successfully. In such embodiments (not depicted), the user interface can suggest troubleshooting steps such as verifying that the valves are closed or that a refrigerant fluid canister is properly installed and then rerunning the diagnostic test.

Generally, diagnostic testing can be performed as needed or on a pre-determined schedule basis. For example, the leak verification testing can be performed when new equipment or valves are received and then, for example, monthly or quarterly thereafter. If a machine is fully assembled and ready to use, an automated leak test can be performed daily.

In addition to diagnostic testing, the systems and methods described herein can also perform automatic leak detection by monitoring the weight values of the refrigerant fluid. In particular, if the controller detects a discrepancy between the expected weight (determined by incremental weight measurements) of the refrigerant fluid and the actual weight of the refrigerant fluid, the controller can determine that a leak or mishandling is present. For instance, if the controller detects a particular refrigerant fluid container is losing the same amount of refrigerant fluid per day, the controller can determine that the refrigerant fluid container has a leak. Conversely, if the weight loss only occurs on a particular recharge machine, the loss can be attributable to a leak on the recharge machine and can suggest that the diagnostic method be repeated. Conversely, if there is refrigerant fluid loss that occurs only after a particular technician uses the machine, the controller can indicate that there is a handling or training issue with that particular technician.

### Management Functions

In certain embodiments, the systems and methods described herein can further include advanced management functionality. In particular embodiments, a controller can authorize operation and dispensing of refrigerant fluid by enabling and/or controlling the refrigerant fluid recharge machines. This authorization can be made by a user either manually (on the machine) or it can be made remotely.

In embodiments including management functions, a controller can perform an authentication function to enable use of a refrigerant fluid recharge machine. Such functionality can prevent unauthorized use of the recharge machine by untrained workers or for unauthorized purposes. Additionally, such management functions can provide an accountable and auditable record of the amount of refrigerant fluid serviced including any amounts dispensed. As all refrigerant fluid is tracked, including in the recharge machine, any amounts in storage, and any in the refrigeration system being serviced, invoicing and management are improved. Reports of refrigerant fluid used can also be generated and linked to the user and/or operations being performed.

In certain embodiments, the systems described herein can simplify maintenance and repair work by generating reports detailing the amount of refrigerant fluid used in maintenance or repair work. Such systems can also prevent fraud or abuse by providing an auditable system that provides for an exact amount of refrigerant fluid used in maintenance or repair work.

Generally, a controller can perform management functions by requiring at least input of a user ID before enablement of an air conditioning recharge machine. The user ID can be input by any suitable method such as entry on a keyboard, biometrics, scanning of an ID badge, QR Code, Near Field Communication (NFC) connection, Radio Frequency Identification (RFID), or remote authentication using another device such as a computer, cellphone, tablet, or other mobile device.

In certain such embodiments, the controller can require further additional information before enabling use of an air conditioning recharge machine. For example, one or more of a VIN number or purchase order ("PO") number can be required in addition to a user ID in order to ensure that tracking of the refrigerant fluid, and the work for which refrigerant is used, is properly accounted for. Certain recharge machines can further lock access to the container of refrigerant fluid without authorization from the controller.

A controller can authorize the air conditioning recharge machine for a set duration of time, a set number of recharge cycles, and/or for a set amount of refrigerant fluid dispensing in various embodiments. In addition to authorizing a specific machine indicated by a unique identifier, a controller may authorize one or more personas which may be assigned to one or more machines. Personas may be migrated from machine to machine, carrying with them the authorization initially provided by the controller. Personas are machine configurations that specify how the recharge machine operates, which machine functions are enabled or disabled, and tracks the type and volume of refrigerant used as a user interacts with different machines. This enables reports to be generated by persona, by machine, or by an entire facility that can be compared against refrigerant billed by a parts department.

In certain embodiments, a controller can link the amount of refrigerant fluid authorized to be dispensed to the VIN number of a vehicle to be serviced and/or to a PO number. For example, a controller can automatically determine the amount of refrigerant fluid to be filled after scanning or input of a Vehicle Identification Number ("VIN"), or by inputting vehicle data like the year, make and model. The controller can include a database of vehicles by year and type or consult an external database to determine the type and amount of refrigerant fluid. The controller can send commands to the recharge unit to configure the recharge unit to dispense the optimal amount of the required refrigerant fluid to the vehicle. The controller can issue an alert if the amount dispensed to the vehicle differs from the required amount to be dispensed for that particular vehicle type and make. The controller can also restrict operation of the refrigeration fluid recharge machines outside of specified hours, when not connected to a known network connection (such as wifi), or outside of a geofence (determined by wifi or gps).

In certain embodiments, the controller can link to a unified service management system such as a Dealer Management System ("DMS"), insurance system, or warranty system. Automatic linkage with a unified service management system can simplify records and accounting and can ensure repairs and maintenance of an Air Conditioning system is performed properly in the larger repair and maintenance context. In certain embodiments, the unified service management system can handle invoicing. The linkage with the unified service management system can be automatic (e.g., through a direct data connection or an API) or manual through a validated physical or electronic file. Checksums and other data integrity schemes can be used to ensure that data is not manipulated. Generally, the data can be transmitted in any formatting and can include raw data (e.g., authentications, amount of fluid dispensed, vehicle information, etc.) or be a fully prepared report ready for invoicing in various embodiments. In certain embodiments, the controller can communicate with multiple different unified service management systems.

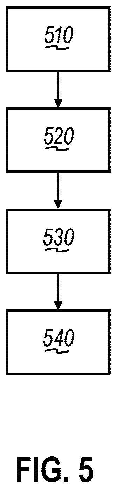

FIG. 5 depicts an exemplary flow chart for the generation or transmittal of a repair or maintenance report. The process starts with the request to generate a report 510. The request 510 can be automatically requested (e.g., on a pre-determined schedule or at the completion of a work request) or manually. The process continues with the controller accessing databases 520 on one or more refrigerant fluid recharge machines. The databases contain the recorded information necessary to generate the report including the changes in the amount of refrigerant fluid during operations, the user and/or work order authentication, and details about the system serviced (e.g., vehicle information). After the database is accessed, the controller prepares a report 530 using the information in the database. The process ends with the transmission of the report 540. The report can be transmitted to a unified service management system, printed, or stored in a physical or electronic file.

As can be appreciated, larger maintenance and repair shops can include multiple machines capable of refrigerant recovery, recycling, and recharging. Selecting the optimal refrigeration fluid recharge machine can require comparing which recharge machines are available or in use, which refrigerant fluids a recharge machine can dispense, the available volumes of refrigerant fluid, whether the recharge machine can dispense more than one type of refrigerant fluid, and even whether refrigerant fluid is nearing the end of its shelf life. In certain embodiments, the controller can automatically recommend and/or enable specific recharge machines by ranking which recharge machines have the appropriate refrigerant fluid and will optimally utilize the remaining refrigerant fluid. For example, if a vehicle requires R1234y refrigerant fluid, the controller can recommend a technician use a recharge machine that is available and dispenses only R1234y (to preserve a recharge machine that dispenses both R1234y and R134a). In certain embodiments, the controller can recommend a recharge machine that will not leave an unusable amount of waste refrigerant fluid. For example, if a vehicle requires 125g of R1234y, the controller can select a recharge machine that has 250g of refrigerant fluid instead of a machine that has 150g of refrigerant fluid (which would be better utilized with a vehicle that needs 150g). In certain embodiments, the controller can further indicate which recharge machines are out of refrigerant fluid, will need a refill soon, or are in need of a service (e.g., after failing a diagnostic test performed by the controller).

In certain embodiments, the controller can automatically recommend the order by which to service specific vehicles by model or any other number of vehicle characteristics as well as recharge machine availability. If multiple vehicles are in queue for service, the controller may recommend an optimized timetable for service.

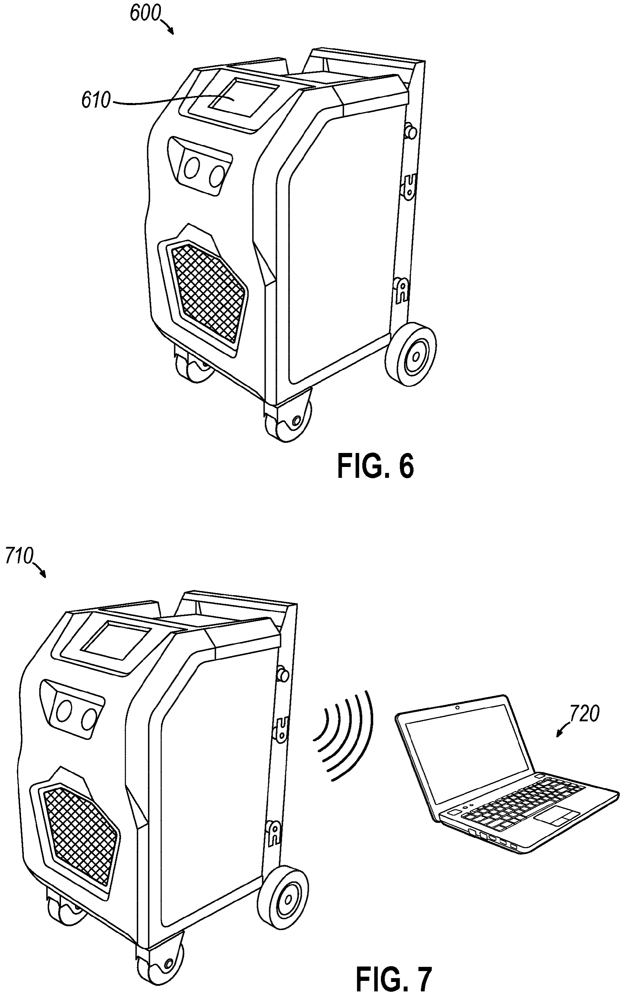

In such embodiments, the controller can be accessed on the refrigerant recharge machine or remotely (e.g., from a computer, tablet, or web portal). FIG. 6 depicts a schematic image of a user interface of the controller 610 running on a refrigerant recharge machine 600. In embodiments having a remote controller, the controller can be run on hardware separate from the refrigerant recharge machine but interface (either wirelessly or through a physical connection) to the refrigerant recharge machine. FIG. 7 depicts an image of a refrigerant recharge machine 710 wirelessly transmitting data (e.g., refrigerant fluid usage, authentication data, etc.) to a laptop 720 acting as a remote controller. Data can also be transmitted to any known internet-capable device such as a desktop computer.

### Analytics

In certain embodiments, the controller can further compile analytics including, but not limited to, automatic tracking of vehicles serviced; recommendations for how to service vehicles based on the available refrigerant fluid inventory; and perform cost tracking and optimization.

For example, the controller can further produce a report that determines one or more of the cost of refrigerant fluid used, the expected profit or loss of refrigerant fluid, and even automatically suggest when additional refrigerant fluid should be ordered. In certain embodiments, the controller can provide a historical view of vehicles serviced and can use such historical data to suggest when additional refrigerant fluid, and which type, should be ordered. Additionally, the controller may be integrated with a service schedule enabling recommendations based on projected service work that was previously inputted by a user or determined based on previous or related service work.

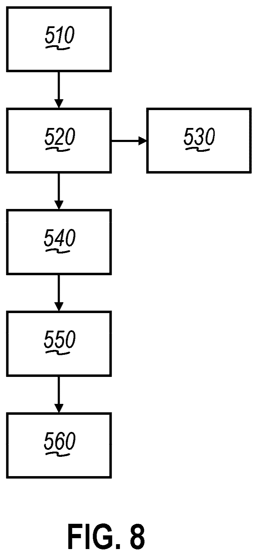

A flow chart depicting an automatic configuration of a recharge machine is depicted in FIG. 8. As depicted, the process starts when a refrigeration system to be serviced is identified at 810. The refrigeration system can be identified by input of a VIN, vehicle data such as year make and model, or other refrigeration system identifier. The process continues with a configuration and dispensing of the configured amount of refrigeration fluid at step 820. An automatic alert 830 is trigged if the amount dispensed does not match the configured amount determined at step 820. The amount dispensed is then recorded in a database at step 740. Periodically or continuously, the controller can determine if there are any unpurchased losses by computing the total amount of refrigerant fluid purchased and then subtracting out the amount sold or serviced and the amount remaining in inventory at step 850. A report can be generated detailing the loss discrepancy at step 860.

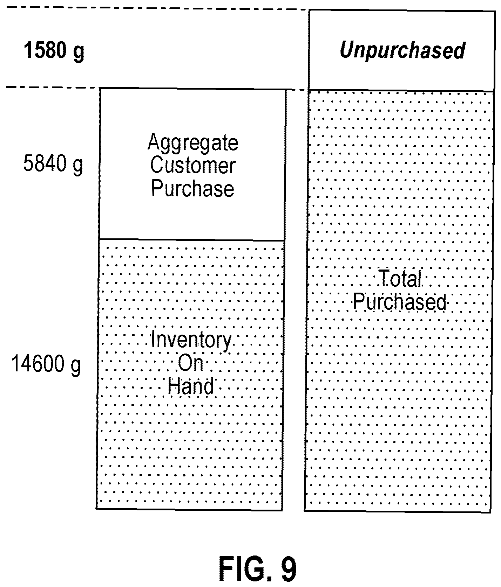

A sample loss discrepancy report is depicted in FIG. 9. As depicted, the loss discrepancy report is a report showing the amount of available inventory on hand, the aggregate customer purchase amount, and the unpurchased "loss" that is unaccounted for. Periodic review of the loss discrepancy report can indicate that there is an issue that needs to be addressed such as a leak or inappropriate use of the refrigerant fluid. Using known data analysis methods, possible sources of refrigerant loss may be indicated in the loss discrepancy report. In the same manner, if the amount purchased exceeds the amount used, this could indicate overbilling. The overbilling amount can be quantified in a discrepancy report that identifies overbilling by any number of groups such as persona, employee, service date range, VIN number, work order number, or vehicle type.

Additionally, or alternatively, the controller can track and provide additional reports. For example, the controller can produce a detailed summary of the history of a recharge machine including the cars serviced, the amount of refrigerant fluid dispensed, amount of refrigerant recovered, quantity of oil drained from vehicle, vacuum pressure readings, and a summary of the refrigerant fluid use. Trends between the reports can also be generated such as a trend for changing amounts of one type of refrigerant fluid for another type of refrigerant fluid. The reports can be tailored for different types of users. For example, detailed summaries can be generated for shop owners, anonymized and aggregated reports for manufacturers and repair facilities, and the like.

### Exemplary Embodiments

Example A1: A system for tracking refrigerant fluid includes:
a controller; and
one or more refrigerant fluid recharge machines, each including a weight scale for measuring the weight of refrigerant fluid containers, the weight scale configured to transmit the measured weight to the controller. The controller enables operation of the one or more refrigerant fluid recharge machines after an authentication step. The controller is further configured to determine a change in the amount of refrigerant fluid in a refrigerant fluid container after an operation involving the refrigerant fluid container.

Example A2. The system of example A1, wherein the authentication step authenticates an operator of the one or more refrigerant fluid recharge machines.

Example A3. The system of example A2, wherein the operator is authenticated using one or more of an employee ID, employee badge, phone identity provider application, biometric data, a QR Code, a Near Field Communication (NFC) tag, a Radio Frequency Identification (RFID) tag, or an authentication code.

Example A4. The system according to any one of the preceding examples, wherein the authentication step verifies the operation.

Example A5. The system of example A4, wherein the operation is servicing of an automotive vehicle and wherein the authentication step comprises inputting the automotive vehicle information.

Example A6. The system of example A5, wherein the automotive vehicle information comprises the model and year of the automotive vehicle or a vehicle identification number ("VIN").

Example A7. The system according to any one of the preceding examples, wherein the authentication step comprises entering the type of work to be performed or a purchase order.

Example A8. The system according to any one of examples A4 to A7, wherein the controller determines the amount of refrigerant fluid to be dispensed by the refrigerant fluid recharge machine based on the authentication step.

Example A9. The system according to any one of the preceding examples, wherein the controller includes a database, and wherein the controller records the authentication step and the change in the amount of refrigerant fluid in the operation to the database.

Example A10. The system of example A9, wherein the controller compares the amount of refrigerant fluid used in the operation against an expected amount of refrigerant fluid needed for the operation.

Example A11. The system according to any one of the preceding examples, wherein the controller is configured to generate a report summarizing the refrigerant fluid used for each authentication step.

Example A12. The system according to any one of the preceding examples, wherein the controller generates a report to indicate overbilling which is grouped by one of: persona, employee service date, service date range, VIN number, work order number, or vehicle type.

Example A13. The system according to any one of the preceding examples, wherein the controller generates a loss report that suggests possible sources of refrigerant loss.

Example A14. The system according to one of examples A11 to A13, wherein the reports are communicated to a printer or external database.

Example A15. The system according to any one of the preceding examples, wherein the controller includes a diagnostic program.

Example A16. The system of example A15, wherein the diagnostic program provides:
visual instructions to a user to operate the diagnostic program; and
concurrently or sequentially runs hardware on the refrigerant fluid recharge machines.

Example A17. The system of example A15 or example A16, wherein the diagnostic program comprises visual, auditory, and haptic feedback.

Example B1. A diagnostic and troubleshooting system for an air-conditioning recharge machine includes:
a controller including a processor, memory, and hardware communication links to the air-conditioning recharge machine; the memory including a database of diagnostic programs and troubleshooting programs; and
a user interface connected to the controller and including a screen for displaying information generated by the controller and receiving user input.

The controller is configured to run one or more of the diagnostic programs and troubleshooting programs.

The diagnostic programs and troubleshooting programs configured to run hardware on an air-conditioning recharge machine to verify operation of the air-conditioning recharge machine.

Example B2. The diagnostic and troubleshooting system of example B1, wherein the diagnostic programs and troubleshooting programs comprise visual, auditory, and haptic feedback.

Example B3. The diagnostic and troubleshooting system of example B2, wherein a user is prompted using visual, auditory, and haptic feedback on the user interface to physically configure the air-conditioning recharge machine for diagnostic or troubleshooting purposes.

Example B4. The diagnostic and troubleshooting system of example B3, wherein the user interface guides a user through the diagnostic programs and troubleshooting programs.

The dimensions and values disclosed herein are not to be understood as being strictly limited to the exact numerical values recited. Instead, unless otherwise specified, each such dimension is intended to mean both the recited value and a functionally equivalent range surrounding that value.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Every document cited herein, including any cross-referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests, or discloses any such invention. Further, to the extent that any meaning or definition of a term in this document conflicts with any meaning or definition of the same term in a document incorporated by reference, the meaning or definition assigned to that term in the document shall govern.

The foregoing description of embodiments and examples has been presented for purposes of description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent articles by those of ordinary skill in the art. Rather it is hereby intended the scope be defined by the claims appended hereto.

It should be understood that certain aspects, features, structures, or characteristics of the various embodiments can be interchanged in whole or in part. Reference to certain embodiments mean that a particular aspect, feature, structure, or characteristic described in connection with certain embodiments can be included in at least one embodiment and may be interchanged with certain other embodiments. The appearances of the phrase "in certain embodiments" in various places in specification are not necessarily all referring to the same embodiment, nor are certain embodiments necessarily mutually exclusive of other certain embodiments. It should also be understood that the steps of the methods set forth herein are not necessarily required to be performed in the orders described, and the order of the steps of such methods should be understood to be merely exemplary. Likewise, additional steps can be included in such methods, and certain steps may be omitted or combined, in methods consistent with certain embodiments.

## Claims

1. A system for tracking refrigerant fluid comprising:
a controller; and
one or more refrigerant fluid recharge machines, each comprising a weight scale for measuring the weight of refrigerant fluid containers, the weight scale configured to transmit the measured weight to the controller; and;
wherein the controller enables operation of the one or more refrigerant fluid recharge machines after an authentication step; and
wherein the controller is further configured to determine a change in the amount of refrigerant fluid in a refrigerant fluid container after an operation involving the refrigerant fluid container.

2. The system of claim 1, wherein the authentication step authenticates an operator of the one or more refrigerant fluid recharge machines.

3. The system according to claim 2, wherein the operator is authenticated using one or more of an employee ID, employee badge, phone identity provider application, biometric data, a QR Code, a Near Field Communication (NFC) tag, a Radio Frequency Identification (RFID) tag, or an authentication code.

4. The system according to any one of the preceding claims, wherein the authentication step verifies the operation.

5. The system of claim 4, wherein the operation is servicing of an automotive vehicle and wherein the authentication step comprises inputting the automotive vehicle information.

6. The system of claim 5, wherein the automotive vehicle information comprises the model and year of the automotive vehicle or a vehicle identification number ("VIN").

7. The system according to any one of the preceding claims, wherein the authentication step comprises entering the type of work to be performed or a purchase order.

8. The system according to any one of claims 4-7, wherein the controller determines the amount of refrigerant fluid to be dispensed by the refrigerant fluid recharge machine based on the authentication step.

9. The system according to any one of the preceding claims, wherein the controller includes a database, and wherein the controller records the authentication step and the change in the amount of refrigerant fluid in the operation to the database.

10. The system of claim 9, wherein the controller compares the amount of refrigerant fluid used in the operation against an expected amount of refrigerant fluid needed for the operation.

11. The system according to any one of the preceding claims, wherein the controller is configured to generate a report summarizing the refrigerant fluid used for each authentication step.

12. The system according to any one of the preceding claims, wherein the controller generates a report to indicate overbilling which is grouped by one of: persona, employee service date, service date range, VIN number, work order number, or vehicle type.

13. The system according to any one of the preceding claims, wherein the controller generates a loss report that suggests possible sources of refrigerant loss.

14. The system according to one of claims 11 to 13, wherein the reports are communicated to a printer or external database.

15. The system according to any one of the preceding claims, wherein the controller includes a diagnostic program.
